# EUROPEAN PATENT SPECIFICATION

(11) **EP 0 734 832 B1**
(45) Date of publication and mention of the grant of the patent: **14.08.2002**
(21) Application number: 96302157.1
(22) Date of filing: 28.03.1996
(51) Int. Cl.: B29C 45/14, B29C 45/13, B29C 33/18

(54) **Method and die assembly device for injection molding laminated assemblies**
Verfahren zum Spritzgiessen mehrschichtiger Gegenstände und Form dafür
Procédé de moulage par injection d'objet multicouche et moule pour ce procédé

(30) Priority: 29.03.1995 JP 7201695
(43) Date of publication of application: 02.10.1996
(73) Proprietor: KASAI KOGYO CO., LTD., Tokyo-to (JP)
(72) Inventor: Hara, Masahiko, Samukawa-cho, Kouza-gun, Kanagawa-ken (JP); Ono, Tatusi, Samukawa-cho, Kouza-gun, Kanagawa-ken (JP); Ota, Tetsuyuki, Samukawa-cho, Kouza-gun, Kanagawa-ken (JP)
(74) Representative: Ben-Nathan, Laurence Albert

(56) References cited:
- EP-A- 0 596 588
- EP-A- 0 704 290
- GB-A- 2 214 860
- GB-A- 2 236 705
- GB-A- 2 271 956
- PATENT ABSTRACTS OF JAPAN vol. 97, no. 2, 28 February 1997 & JP 08 281704 A (INOAC CORP), 19 October 1996,
- PATENT ABSTRACTS OF JAPAN vol. 18, no. 229 (M-1598), 26 April 1994 & JP 06 023794 A (SANKO KK), 1 February 1994,
- PATENT ABSTRACTS OF JAPAN vol. 95, no. 11, 26 December 1995 & JP 07 195431 A (TOKYO SEAT KK), 1 August 1995,

## Description

### TECHNICAL FIELD

The present invention relates to a method and a die assembly device for molding laminated assemblies which are suitable for use as automotive door trims and other automotive upholstery components, and in particular to a method and a die assembly device for molding laminated assemblies which can mold two-element assemblies including a resin core member and a surface skin member integrally covering a part of the resin core member at high precision.

### BACKGROUND OF THE INVENTION

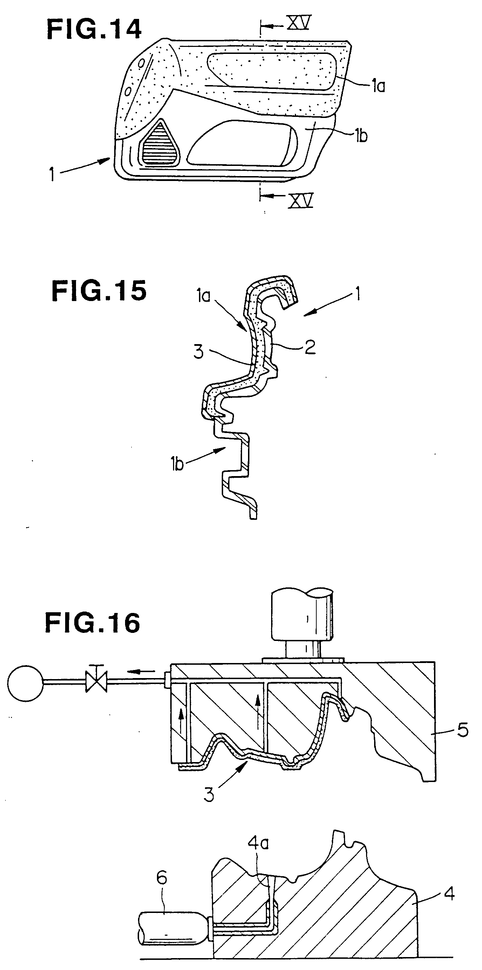

Figure 14 is a front view of an automotive door trim given as an example of an automotive upholstery component. This automotive door trim 1 is constructed as a two-element molded assembly having an upper portion 1a and a lower portion 1b of contrasting appearances (including colors) with the aim to improve its external appearance. Normally, the upper portion 1a and the lower portions 1b are fabricated separately, and are joined by using screws .

More recently, it has been proposed to use a common resin core member to provide a more economical two-element molded assembly. Such a molded assembly typically comprises, as illustrated in Figure 15, a resin core member 2 molded into a curved shape, and provided with a sufficient rigidity to retain its shape, and a surface skin member 3 covering a part of the resin core member 2. With regard to the upper portion 1a, the surface of the resin core member 2 is covered by the surface skin member 3. With regard to the lower potion 1b, no surface skin member is used, and the resin core member 2 is exposed so that a contrasting appearance may be created in relation with the upper portion 1a.

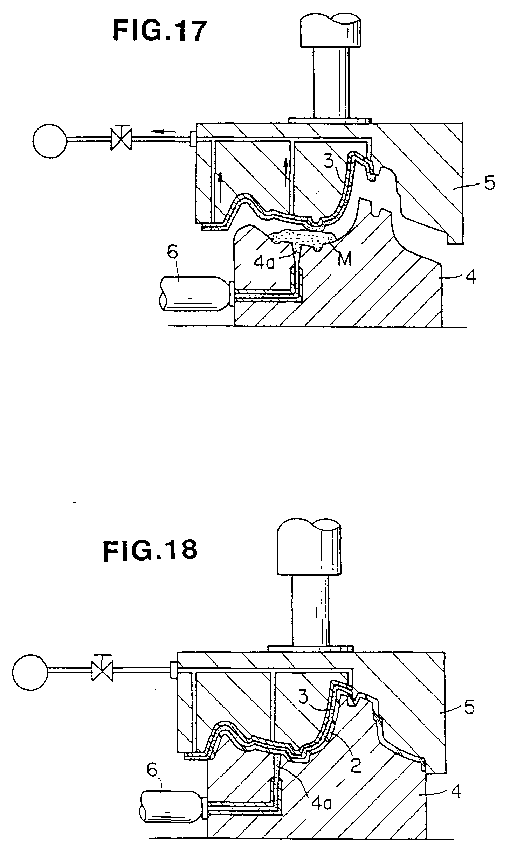

The applicant of this application has previously filed a Japanese patent application No. 6-181500 on a method for molding a laminated assembly such as the automotive door trim 1 illustrated in Figures 14 and 15. According to this previous proposal, as illustrated in Figures 16 to 18, when the upper and lower dies 4 and 5 for mold press forming are open, the surface skin member 3 is placed on a part of the die surface of the upper die 5 as illustrated in Figure 16, and the upper die 5 is lowered by a prescribed stroke so that a prescribed gap is defined between the upper and lower dies 4 and 5. Then, softened resin M is delivered from an injection molding device 6 connected to the lower die 4 to a prescribed area of the die surface of the lower die 4 via a gate 4a passed through the lower die 4 as illustrated in Figure 17. Thereafter, the upper die 5 is lowered to its bottom dead center, and the upper and lower dies 4 and 5 are closed upon each other so that the resin core member 2 is mold press formed into the prescribed shape while the surface skin member 3 is integrally attached to a part of the surface of the resin core member 2 as illustrated in Figure 18. The molding of the automotive door trim as illustrated in Figures 14 and 15 is thus completed.

According to this conventional method for molding, the location of the gate 4a in the lower die 4 is restricted to be under the surface skin member 3 to avoid any undesirable surface flaws such as flow marks and silver streaks from appearing on the front surface of the resin core member 2. However, it is difficult to deliver the softened resin M to all corners of the cavity from such a gate 4a alone, and, hence, the possibility of the occurrence of undesirable molding results, such as short shots caused by the failure to deliver the softened resin M to the peripheral part of the cavity, tends to be undesirably high depending on the melt index of the resin or a measure of the fluidity of the softened resin M. A short shot could be avoided if the thickness of the resin core member 2 is increased to increase the fluidity of the resin, but the increase in the thickness of the resin core member 2 means a higher material cost and a greater weight.

GB-A-2,271,956 discloses a method of manufacturing a resin member by mounting a surface skin member on a die part, moving the die part to a first stationary position, and supplying resin to a cooperating die part and closing the dies. Before the resin hardens a second resin is injected into a second cavity between the dies to fuse with the first resin.

GB-A-2,236,705 describes a method of locating a preformed external skin in a compression mold, to produce a multi-layer molded article. The skin material is lifted from a lower mold to contact an upper mold and a resin melt is supplied between the upper and lower molds.

### BRIEF SUMMARY OF THE INVENTION

In view of such problems of the prior art, a primary object of the present invention is to provide an improved method for molding laminated assemblies which can achieve a favourable external appearance by covering a part of a resin core member with a surface skin member and thereby producing a contrasting effect, and which can mold laminated assemblies at a high precision so that the thickness of the resin core member can be reduced and the weight of the assembly can be thereby reduced.

A second object of the present invention is to provide a method for molding laminated assemblies which can prevent the surface skin member from being thermally or physically damaged during the mold press forming process.

A third object of the present invention is to provide a method for molding laminated assemblies which can prevent surface flaws such as flow marks and silver streaks from showing on the surface of the exposed part of the resin core member.

A fourth object of the present invention is to provide a die assembly device which is suitable for implementing the method of the present invention.

According to the present invention, these and other objects can be accomplished by providing a method for molding a laminated assembly in accordance with Claim 1.

This method can be favourably implemented by using a die assembly device in accordance with Claim 2.

Thus, the gates are provided separately for the part covered by the surface skin member and the part not covered by the surface skin member, and the upper die is kept stationary at two points during its downward stroke. Therefore, the softened resin can be supplied to the part under the surface skin member with a relatively large clearance defined between the upper and lower dies so that the surface skin member is prevented from being thermally and physically damaged by the softened resin at a high temperature. The softened resin can be supplied to the part exposing the surface of the resin core member with a relatively small clearance defined between the upper and lower dies so that surface flaws such as flow marks and silver streaks can be prevented from occurring, and the softened resin can be delivered to all corners of the cavity without causing any short shots.

By providing a separating plate in the lower die for mold press forming for dividing two flows of the softened resin supplied from their respective gates from each other, it is possible to completely separate the two flows of the semi-resin and improved molding results can be achieved. In particular, by allowing two different resin materials to be used for the part covered by the surface skin member and the part not covered by the surface skin member, it is possible to select optimal materials for the different parts of the product, for instance by selecting an inexpensive material for the concealed part of the product and a high grade material for the exposed part of the product. It is therefore possible to maximize the attractiveness of the product at a minimal cost.

### BRIEF DESCRIPTION OF THE DRAWINGS

Now the present invention is described in the following with reference to the appended drawings, in which:
Figure 1 is a front view of the automotive door trim which is fabricated by the method of the present invention ;
Figure 2 is a sectional view taken along line II-II of Figure 1;
Figure 3 is a sectional view showing a first embodiment of the die assembly device which can be used for implementing the method of the present invention;
Figure 4 is an end view as seen from the direction indicated by an arrow in Figure 3;
Figure 5 is a time chart showing the press mode of the upper die illustrated in Figure 3;
Figure 6 is a sectional view showing the process of mounting the surface skin member according to the method of the present invention;
Figure 7 is a sectional view showing the upper die according to the present invention at its first stationary position;
Figure 8 is a sectional view showing the upper die according to the present invention at its second stationary position;
Figure 9 is a sectional view showing the process of mold press forming according to the method of the present invention;
Figure 10 is a sectional view showing the process of mounting the surface skin member according to the second embodiment of the method of the present invention;
Figure 11 is a sectional view showing the upper die according to the second embodiment of the present invention at its first stationary position;
Figure 12 is a sectional view showing the upper die according to the second embodiment of the present invention at its second stationary position;
Figure 13 is a sectional view showing the process of mold press forming according to the second embodiment of the method of the present invention;
Figure 14 is a sectional view of a conventional automotive door trim;
Figure 15 is a sectional view taken along line XV-XV of Figure 14;
Figure 16 is a sectional view showing the process of mounting the surface skin member according to the prior art;
Figure 17 is a sectional view showing the process of supplying the semi-molten resin according to the prior art; and
Figure 18 is a sectional view showing the process of mold press forming according to the prior art.

### DETAILED DESCRIPTION OF THE PREFERRED EMBODIMENTS

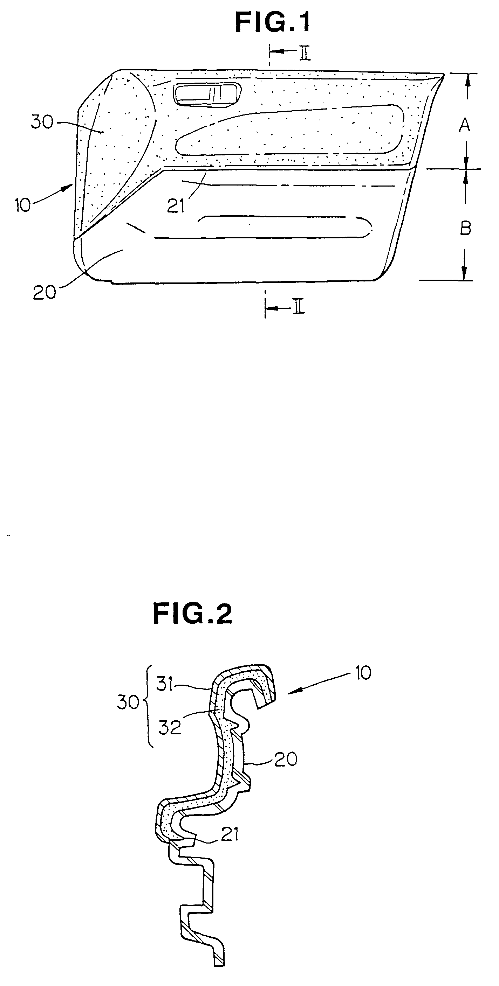

First of all, the structure of the automotive door trim 10 fabricated by the method of the present invention is briefly described in the following with reference to Figures 1 and 2. The automotive door trim 10 essential consists of a resin core member 20 molded into a desired curved shape, and a surface skin member 30 integrally attached to a part of the resin core member 20. The resin core member 20 is made of polypropylene resin mixed with a filler such as talc, and is molded into a complicated curved shape by the mold press forming process as described hereinafter. During this mold press forming process, the surface skin member 30 is integrally attached to a part of the surface of the resin core member 20.

The surface skin member 30 comprises a top layer 31 made of a PVC sheet, and a foamed lining layer 32 made of polyethylene foam. A groove 21 having a depth in the rage of 5 to 10 mm is formed in the resin core member 20 along the lower periphery of the surface skin member 30. By fitting the lower edge of the surface skin member 30 in this groove 11, the appearance of the surface skin member 30 along its periphery is improved.

The automotive door trim 10 which is made by the method of the present invention consists of an upper portion A in which the surface skin member 30 covers the resin core member 20, and a lower portion B in which the resin core member 20 is exposed so that a contrasting appearance may be created between the upper and lower portions A and B. Therefore, as compared with the conventional door trim made by a two-element molded assembly, because the resin core member 20 is unitary or is integrally formed, the manufacturing steps can be simplified. In particular, the need for joining the lower member and the upper member together with screws or the like can be eliminated, and a substantial reduction in cost can be achieved.

As will be described hereinafter, by appropriately selecting the positions of the gates for supplying softened resin M1 and M1, and scheduling the press mode, surface flaws such as flow marks and silver streaks are prevented from appearing on the surface of the lower portion B of the door trim 10, and molding defects such as short shots can be avoided so that the resin core member 20 is given with a favorable external appearance and the reject ratio can be reduced to a lower level than was heretofore possible.

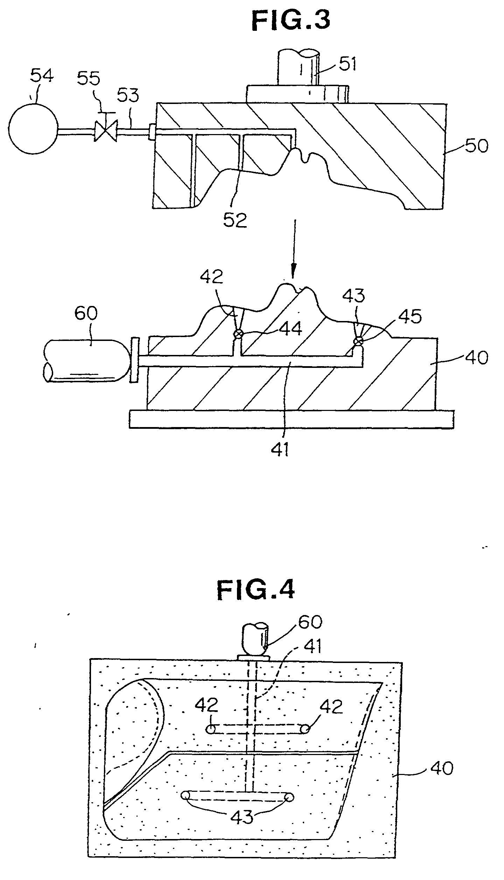

Figure 3 shows the structure of a first embodiment of the molding die assembly used for implementing the method of the present invention. This molding die assembly comprises a lower die 40 for mold press forming adapted to receive softened resin serving as the material for the resin core member 20 on its die surface, an upper die 40 for mold press forming which is located above the lower die 40 for mounting a surface skin member 30 on a part of its die surface and is adapted to be moved vertically by a prescribed stroke, and an injection molding device 60 which is connected to the lower die 40 for supplying the softened resin M thereto.

More specifically, the upper die 50 for mold press forming can move vertically by a prescribed stroke by a lifting cylinder 51, and is provided with a die surface conforming to the shape of the product. A plurality of vacuum suction holes 52 are formed in prescribed locations of the die surface of the upper die to mount the surface skin member 30 on a part of the die surface of the upper die 50, and these vacuum suction holes 52 are communicated with a vacuum pump 54 via a conduit 53 provided with an on-off valve 55 such as a solenoid valve. The lower die 40 for mold press forming is incorporated with a manifold 41 which is connected to the nozzle of an injection molding device 60, and a plurality of gates 42 and 43 communicating with the manifold are provided in selected locations of the lower die 40.

One of the features of the present invention is that the gates 42 and 43 are provided in both the area corresponding to the surface skin member 30 (surface skin area) and the area corresponding to the exposed part of the resin core member 20 (resin core area) with regard to a two-element molded assembly. More specifically, as illustrated in the plan view of the lower die 40 for mold press forming of Figure 4, for molding the door trim 10, a pair of surface skin member area gates 42 are provided in the parts corresponding to the upper portion A covered by the surface skin member 30, and another pair of resin core member area gates 43 are provided in the parts corresponding to the lower portion B presenting an exposed surface of the resin core member 20.

The gates 42 and 43 are provided with respective valves 44 and 45 for controlling the timing of delivering softened resin from these gates 42 and 43. Therefore, softened resin M1 is delivered to the part corresponding to the upper portion A covered by the surface skin member 30 via the gates 42, and remaining softened resin M2 is delivered to the part corresponding to the upper portion B presenting an exposed surface of the resin core member 20.

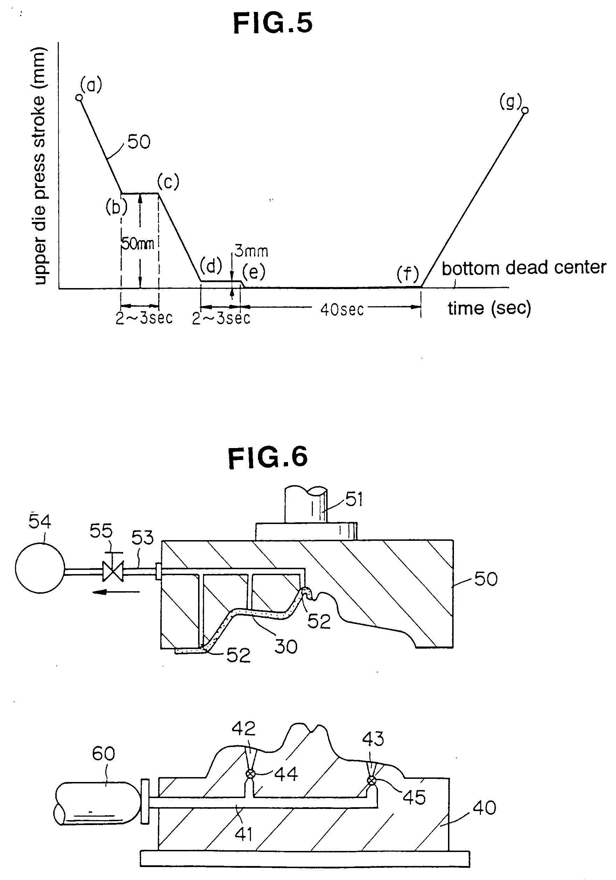

Now the press stroke of the upper die 50 for mold press forming is described in the following with reference to the flow chart of Figure 5. The upper die 50 is lowered from its upper limit position (a) to position (b) by the action of the lifting cylinder 51, and while the upper die 50 remains stationary at this position, the softened resin M1 is delivered from the gates 42.

Thereafter, the upper die 50 is lowered from position (c) to position (d), and while the upper die 50 remains stationary at this position for the second time, the softened resin M2 is delivered from the other gates 43. The upper die 50 is further lowered to its bottom dead center, and the mold press forming is carried out as the upper die moves from position (e) to position (f). Once the molding process is completed, the upper die 50 is raised to its upper limit position (g).

As for the actual distances between these positions, according to this embodiment, the first stationary position of the upper die 50 is 50 mm above the bottom dead center of the upper die 50, and the second stationary position is 3 mm above the bottom dead center. At the bottom dead center, the clearance between the upper and lower dies is 4.5 mm for the area covered by the surface skin member and 2.5 to 3.0 mm for the area where the surface of the resin core member is exposed. This is based on the fact that the sum of the thickness of the resin core member 20 or 3 mm and the compressed thickness of the surface skin member 30 or 1.5 mm is 4.5 mm.

The time periods indicated in the time chart are only an example, and are not intended to be restrictive.

Now the process of fabricating the door trim 10 is described in the following with reference to Figures 6 to 9. First of all, when the upper die 50 is at its upper limit position as illustrated in Figure 6, the surface skin member 30 is mounted on the die surface of the upper die 50 with its top layer 31 facing the die surface. The surface skin member 30 may be already provisionally formed at this time point, but when the shape of the product is simple, the surface skin member may not be formed at this point. Thus, whether the surface skin member is provisionally formed or not at this stage is purely optional.

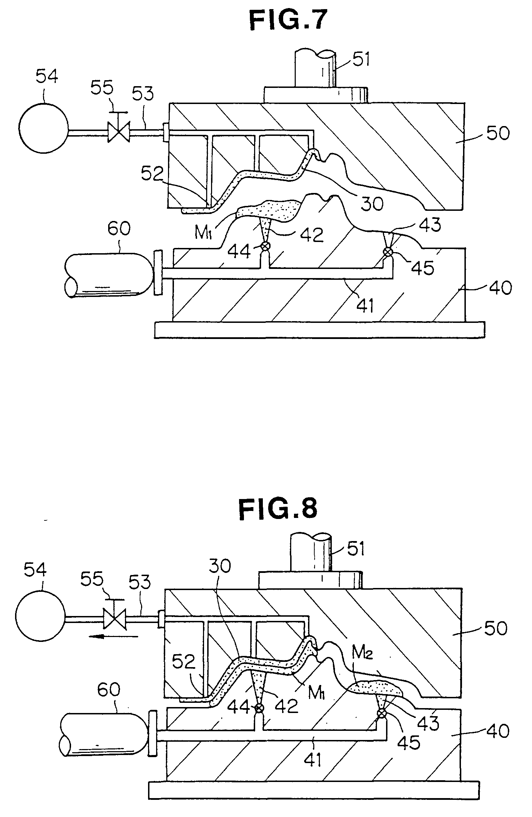

When mounting the surface skin member 30, a vacuum pump 54 is activated, and the on-off valve 55 is appropriately opened or closed so that suitable vacuum suction force is applied to the surface skin member 30 via the vacuum suction holes 52, and the surface skin member 30 is appropriately retained in position at a prescribed location on the die surface of the upper die 50. Thereafter, the upper die 50 is lowered by a prescribed stroke by the action of the lifting cylinder 51 as illustrated in Figure 7, and the upper die 50 is temporarily kept stationary at a point 50 mm above its bottom dead center. At this point, softened resin (M1) is supplied to a region located under the surface skin member 30 via the gates 42.

At this point, the foamed layer 32 of the surface skin member 30 is protected from being damaged by the heat from the softened resin M1 because a relatively large clearance is defined between the foamed layer 32 and the softened resin M1.

Then, as illustrated in Figure 8, the upper die 50 is further lowered by the action of the lifting cylinder 51 to a second stationary position. The second stationary position is located 3 mm above the bottom dead center of the upper die, and, at this point, softened resin is delivered from the other gates 43.

Thereafter, the softened resin M2 defines a surface of the lower portion B of the door trim 10 when it is molded into the product. At this point, the clearance between the upper and lower dies 40 and 50 is so small that there is no substantial drop in the temperature of the softened resin M2, and its fluidity of the resin is substantially maintained. Therefore, the surface of the product is made free from such surface flaws as silver streaks and flow marks.

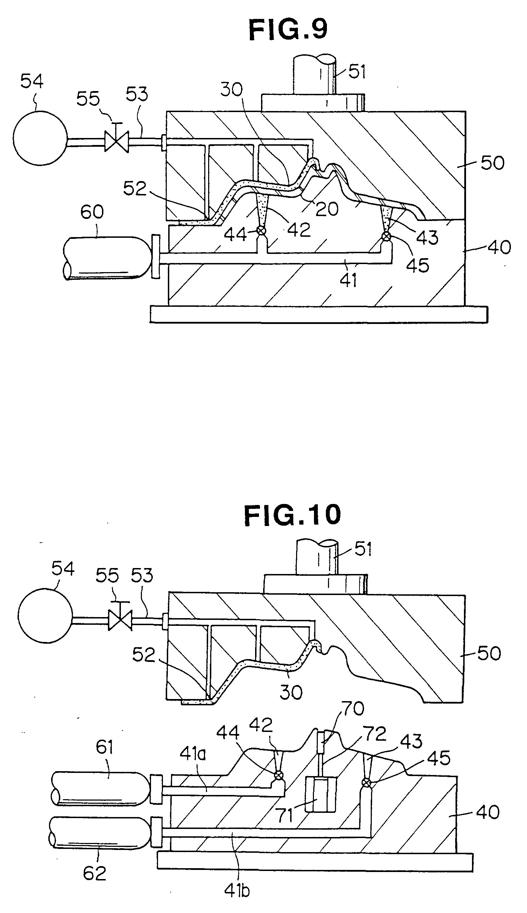

Then, as shown in Figure 9, the upper die 50 is lowered to its bottom dead center, and the resin core member 20 is mold press formed into the prescribed shape while the surface skin member 30 is thermally attached to the part of the surface of the resin core member 20 corresponding to the upper portion A of the door trim 10.

Thus, according to the method of the present invention, the upper die 50 for mold press forming is kept stationary at two points in its downward stroke, and the gates 42 and 43 are provided in both the area covered by the surface skin member 30 and the area not covered by the surface skin member 30. Therefore, as opposed to the prior art which provides the gates only in the area covered by the surface skin member 30, unsatisfactory mold results such as short shots can be avoided, and excessive weights due to excessive thicknesses can be avoided. Also, freedom in the selection of the resin material and the molding conditions can be increased, and the resin materials M1 and M2 for the resin core member 20 can be selected from a wider range of resin materials having different degrees of fluidity.

If the positions of the gates 43 for the part of the resin core member not covered by the surface skin member are selected at parts where the two flows of the softened resin M1 and M2 overlap each other, weld marks and flow marks can be effectively prevented.

Figures 10 to 13 show another embodiment of the method of the present invention, and Figure 10 illustrates the structure of a molding die assembly device for implementing this method.

The parts corresponding to those of the first embodiment are denoted with like numerals, and the detailed description thereof is omitted.

In the molding die assembly device used in the second embodiment, the gates 42 and 43 are connected to associated manifolds 41a and 41b, respectively, which are in turn connected to associated injection molding devices 61 and 62. Additionally, a separating plate 70 which can be moved vertically is provided in the lower die 40 along the boundary of the door trim 10. The structure of the upper die 50 for mold press forming is similar to that of the first embodiment, and the description thereof is therefore omitted.

The separating plate 70 is secured to the upper end of a piston rod 72 extending out of a cylinder 71 such as a hydraulic cylinder and a pneumatic cylinder, and is used for achieving a favorable external appearance of the resin core member by preventing the mixing of the two flows of the softened resin M1 and M2 supplied from the respective gates 42 and 43.

The step of mounting the surface skin member 30 on a part of the die surface of the upper die 50 is similar to that of the first embodiment. At this point, the separating plate 70 is at its uppermost position.

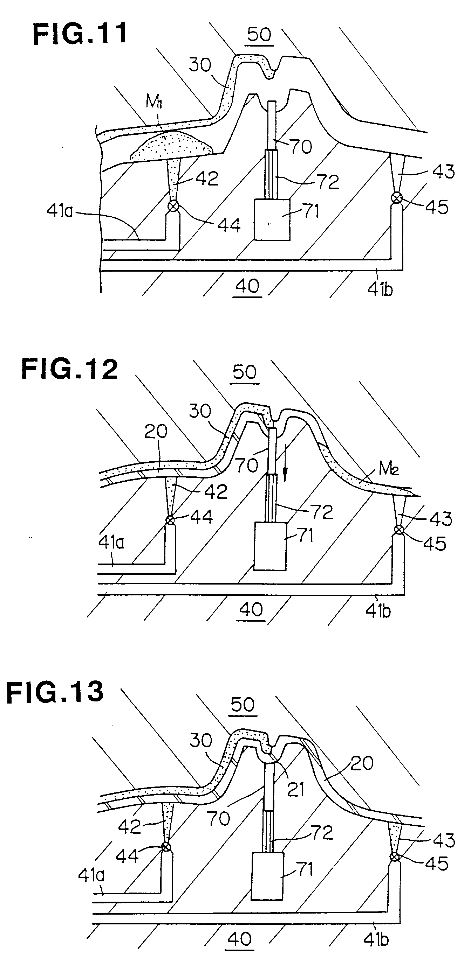

Then, as illustrated in Figure 11, when the upper die 50 is lowered to its first stationary position, the softened resin M1 is delivered from one of the injection molding device 61 via the manifold 41a and the gate 42. Thereafter, the upper die 50 is further lowered to its second stationary position, and the softened resin M1 is compressed, but the separating plate 70 prevents the softened resin M1 from flowing into the part corresponding to the lower portion. Then, the softened resin M2 is delivered from the other injection molding device 62 via the manifold 42a and the gate 43. At this point, the separating plate 70 is lowered by the action of the cylinder 71.

As illustrated in Figure 13, the upper die 50 is lowered to its bottom dead center, and presses the resin for a prescribed time period. As a result, a two-element molded assembly free from surface flaws and having an attractive appearance can be easily obtained as with the first embodiment.

According to the second embodiment, because the two flows of the softened resin M1 and M2 are supplied from separate injection molding devices 61 and 62 via the gates 42 and 43, respectively, it is possible to use different materials for different parts of the product to achieve favorable design characteristics in an economical fashion. For instance, the softened resin M2 for the lower portion B, where the surface of the resin core member is exposed, may be mixed with pigment of a desired color, but the softened resin M1 for the upper portion A which is concealed from the view may consist of an inexpensive material containing no pigment.

The separating plate 70 may also be applied to the first embodiment. In this case, even when chips of the foamed layer 32 of the surface skin member 30 mixes into the softened resin M1 for the part covered by the surface skin member, the separating plate 70 can prevent the chips from mixing into the softened resin M2 for the exposed part of the resin core member 20.

As described above, the method and the die assembly device of molding laminated assembly according to the present invention provides the following advantages.
(1) In mold press forming a two-element molded assembly, separate gates are provided for the part of the lower die corresponding to the area covered by the surface skin member and the part of the lower die corresponding to the area exposing the resin core member, and when supplying softened resin from these gates, the upper die is kept stationary at two points during its downward stroke so as to suitably adjust the clearance between the upper and lower dies. Therefore, the surface skin member is protected from thermal damages, and the resin core member may be made free from such surface flows as silver streaks and weld marks so that a two-element molded assembly having a favorable appearance and touch can be mass produced.
(2) In mold press forming a two-element molded assembly, separate gates are provided in the part of the lower die corresponding to the area covered by the surface skin member and the part of the lower die corresponding to the area exposing the resin core member as opposed to the prior art in which the gates are provided only the region corresponding to the part of the resin core member covered by the surface skin member. Thus, the location of the gates can be arbitrarily selected, and it is not necessary to distribute the resin to remote corners. As a result, the freedom in the design of the die assembly can be improved, and defective molding results such as short shots can be avoided.
(3) In mold press forming a two-element molded assembly, separate gates are provided for the part of the product covered by the surface skin member and the part not covered by the surface skin member. Therefore, it is possible to deliver the softened resin to all corners of the cavity even when the thickness of the resin core member is small. Thus, the freedom of the design of the shape of the product can be improved, and the weight of the product can be reduced.
(4) According to the invention set forth in claim 3, a plurality of different injection molding devices are connected to the associated gates provided in the lower die for mold press forming, and a separating plate is provided in the lower die along the dividing line of the product. It is therefore possible to select appropriate materials for different parts of the products by using a material having a favorable appearance for the part of the product exposing the resin core member and an inexpensive material for the part of the product covered by the surface skin member. Thus, the design characteristics of the product can be improved at a minimum cost.

## Claims

1. A method for molding a laminated assembly essentially consisting of a resin core member (20) formed by molding softened resin into a prescribed shape in a mold press forming die assembly, and a surface skin member (30) integrally placed over a part (A) of said surface of said resin core member during said process of mold press forming said resin core member, comprising said steps of:
mounting said surface skin member (30) on a part of a die surface of an upper die (50) for mold press forming;
lowering said upper die (50) on which said surface skin member is mounted to a first stationary position (b) at which a certain clearance is defined between said upper die (50) and a lower die (40) for mold press forming;
supplying softened resin (M₁)for a part of said resin core member (20) covered by said surface skin member (30) from a gate (42) provided in a part of said lower die (40) corresponding to said surface skin member (30) onto said die surface of said lower die;
further lowering said upper die (50) to a second stationary position (d);
supplying softened resin (M₂) for a part of said resin core member not covered by said surface skin member from another gate (43) provided in a part of said lower die (40) corresponding to an exposed part of said resin core member (20) onto said die surface of said lower die;
further lowering said upper die (50) to a bottom dead center (e) whereby said resin core member (20) is mold press formed into a prescribed shape while said surface skin member (30) is integrally attached to a part of said surface of said resin core member as said upper and lower dies are closed upon each other.

2. A die assembly device for carrying out a method as defined in Claim 1, comprising:
an upper die (50) having a die surface on a part of which a surface skin member (30) may be mounted, and adapted to be moved vertically by a prescribed stroke; and
a lower die (40) which is connected to an injection molding device (60) and is provided with a gate (42) for supplying softened resin material (M₁) for a part of said resin core member covered by said surface skin member, another gate (43) for supplying softened resin material (M₂) for a part of said resin core member not to be covered by said surface skin member, **characterised in that** said lower die (40) is provided with valves (44, 45) for selectively opening and closing said respective gates, and that said upper die (50) is adapted to be kept stationary at two discrete prescribed positions (b,d) intermediate the top and bottom dead center position thereof.

3. A die assembly device for molding a laminated assembly according to Claim 2, wherein a separating plate (70) is provided in said lower die (40) for mold press forming for dividing two flows of said softened resin supplied from their respective gates (42, 43) from each other.

4. A die assembly device for molding a laminated assembly according to Claim 2, wherein said injection molding device comprises a first injection molding device (61) for supplying softened molten resin (M₁) to said gate (42) provided in said lower die for a part of said resin core member covered by said surface skin member, and a second injection molding device (62) for supplying softened resin (M₂) to said another gate (43) provided in said lower die for a part of said resin core member not to be covered by said surface skin member, a vertically movable separating plate (70) to provide a boundary between two flows of softened resins (M₁, M₂) supplied from said respective injection molding devices.

## Patentansprüche

1. Verfahren zum Gießen einer mehrschichtigen Konstruktion, die im wesentlichen aus einem Harzkernelemente (20), das durch Gießen eines erweichten Harzes in eine vorgeschriebene Form in einer Stempelkonstruktion zum Druckgußformen hergestellt wird, und einem Oberflächenhautelement (30) besteht, das während des Druckgußformungsprozesses des Harzkernelements mit über einen Teil (A) dieser Oberflächen dieses Harzkernelements aufgebracht wird, folgende Schritte umfassend:
Aufziehen des Oberflächenhautelements (30) auf einen Teil einer Stempeloberfläche eines oberen Stempels (50) für das Druckgußformen;
Absenken dieses oberen Stempels (50), auf dem das Oberflächenhautelement aufgezogen ist, an eine erste stationäre Position (b), die einen gewissen Spielraum zwischen dem oberen Stempel (50) und einem unteren Stempel (40) für das Druckgußfomen definiert;
Bereitstellen erweichten Harzes (M₁) auf der Stempeloberfläche des unteren Stempels für einen durch das Oberflächenhautelement (30) bedeckten Teil des Harzkernelements (20) von einem Auslaß (42), der in einem mit dem Oberflächenhautelement (30) korrespondierenden Teil des unteren Stempels (40) vorgesehen ist;
weiteres Absenken des oberen Stempels (50) an eine zweite stationäre Position (d);
Bereitstellen erweichten Harzes (M₂) auf der Stempeloberfläche des unteren Stempels für einen nicht durch das Oberflächenhautelement bedeckten Teil des Harzkernelements von einem anderen Auslaß (43), der in einem mit einem exponierten Teil des Harzkernelements (20) korrespondierenden Teil des unteren Stempels (40) vorgesehen ist;
weiteres Absenken des oberen Stempels (50) zu einem unteren Totpunkt (e), wobei das Harzkernelement (20) in die vorgeschriebene Form druckgußgeformt wird, während das Oberflächenhautelement (30) einheitlich mit einem Teil der Oberfläche des Harzkernelements verbunden wird, wenn der obere und untere Stempel aufeinander zu bewegt werden.

2. Eine Stempelkonstruktionsvorrichtung zum Durchführen des Verfahrens nach Anspruch 1, umfassend:
einen oberen Stempel (50), der eine Stempeloberfläche aufweist, bei der auf einem Teil ein Oberflächenhautelement (30) aufgezogen werden kann, und der derart ausgestaltet ist, daß er vertikal in einem vorgeschriebenen Hub bewegt werden kann; und
einen unteren Stempel (40), der mit einer Spritzgußvorrichtung (60) verbunden ist und mit einem Auslaß (42) zur Bereitstellung erweichten Harzmaterials (M₁) für einen durch das Oberflächenhautelement bedeckten Teil des Harzkernelements versehen ist und mit einem anderen Auslaß (43) zur Bereitstellung erweichten Harzmaterials (M₂) für einen nicht mit dem Oberflächenhautelement zu bedeckenden Teil des Harzkernelements versehen ist, **dadurch gekennzeichnet, daß** der untere Stempel (40) mit Ventilen (44, 45) zum selektiven Öffnen und Schließen der jeweiligen Auslässe versehen ist und daß der obere Stempel (40) derart ausgebildet ist, daß er in zwei speziell festgelegten Positionen (b, d) zwischen dem oberen und unteren Totpunkt des Stempels stationär gehalten werden kann.

3. Eine Stempelkonstruktionsvorrichtung zum Gießen einer mehrschichtigen Konstruktion gemäß Anspruch 2, wobei eine Teilungsplatte (70) in dem unteren Stempel (40) für das Druckgußformen vorgesehen ist, um zwei Ströme erweichten Harzes, die von ihren jeweiligen Auslässen (42, 43) bereitgestellt werden, voneinander zu trennen.

4. Eine Stempelkonstruktionsvorrichtung für das Gießen einer mehrschichtigen Konstruktion gemäß Anspruch 2, wobei die Spritzgußvorrichtung eine erste Spritzgußvorrichtung (61) für das Bereitstellen erweichten, fließfähigen Harzes (M₁) zu dem Auslaß (42), der in dem unteren Stempel für einen durch das Oberflächenhautelements bedeckten Teil des Harzkernelements vorgesehen ist, umfaßt und eine zweite Spritzgußvorrichtung (62) zum Bereitstellen erweichten Harzes (M₂) an dem anderen Auslaß (43), der in dem unteren Stempel für einen nicht mit dem Oberflächenhautelement zu bedeckenden Teil des Harzkernelements vorgesehen ist, und eine vertikal bewegliche Trennplatte (70) umfaßt, um eine Grenze zwischen zwei Strömen erweichten Harzes (M₁, M₂), die von den jeweiligen Spritzgußvorrichtungen bereitgestellt werden, vorzusehen.

## Revendications

1. Procédé pour mouler un ensemble stratifié consistant essentiellement en un élément de noyau en résine (20) formé en moulant de la résine ramollie dans une forme prescrite dans un assemblage de matrice pour formage par moulage sous pression et un élément de pellicule superficielle (30) placé intégralement sur une partie (A) de ladite surface dudit élément de noyau en résine pendant ledit processus de formage par moulage sous pression dudit élément de noyau en résine, comprenant lesdites étapes consistant à :
monter ledit élément de pellicule superficielle (30) sur une partie d'une surface de matrice d'une matrice supérieure (50) pour formage par moulage sous pression ;
abaisser ladite matrice supérieure (50) sur laquelle ledit élément de pellicule superficielle est monté jusqu'à une première position stationnaire (b) dans laquelle un certain jeu est défini entre ladite matrice supérieure (50) et une matrice inférieure (40) pour formage par moulage sous pression ;
apporter de la résine ramollie (M₁) pour une partie dudit élément de noyau en résine (20) couvert par ledit élément de pellicule superficielle (30) par une ouverture (42) prévue dans une partie de ladite matrice inférieure (40) correspondant audit élément de pellicule superficielle (30) sur ladite surface de matrice de ladite matrice inférieure ;
abaisser encore ladite matrice supérieure (50) jusqu'à une seconde position stationnaire (d) ;
apporter de la résine ramollie (M₂) pour une partie dudit élément de noyau en résine non couverte par ledit élément de pellicule superficielle (30) par une autre ouverture (43) prévue dans une partie de ladite matrice inférieure (40) correspondant à une partie exposée dudit élément de noyau en résine (20) sur ladite surface de matrice de ladite matrice inférieure ;
abaisser encore ladite matrice supérieure (50) jusqu'à un point mort bas (e) de façon telle que ledit élément de noyau en résine (20) soit formé par moulage sous pression dans une forme prescrite alors que ledit élément de pellicule superficielle (30) est intégralement fixé à une partie de ladite surface dudit élément de noyau en résine quand lesdites matrices inférieures et supérieures sont refermées l'une sur l'autre.

2. Un dispositif d'assemblage de matrices pour réaliser un procédé comme défini dans la revendication 1, comprenant :
une matrice supérieure (50) ayant une surface de matrice sur une partie de laquelle un élément de pellicule superficielle (30) peut être monté, et adaptée pour être déplacée verticalement selon une course prescrite ; et
une matrice inférieure (40) qui est connectée à un dispositif de moulage par injection (60) et est munie d'une ouverture (42) pour apporter un matériau de résine ramollie (M₁) pour une partie dudit élément de noyau en résine couverte par ledit élément de pellicule superficielle, une autre ouverture (43) pour apporter un matériau de résine ramollie (M₂) pour une partie dudit élément de noyau en résine n'étant pas couverte par ledit élément de pellicule superficielle, **caractérisé en ce que** la matrice inférieure (40) est pourvue de vannes (44,45) pour ouvrir et fermer de manière sélective lesdites ouvertures respectives et **en ce que** ladite matrice supérieure (50) est adaptée pour être maintenue stationnaire en deux positions prescrites discrètes (b, d) intermédiaires entre les positions de point mort haut et bas de celle-ci.

3. Dispositif d'assemblage de matrices pour mouler un ensemble stratifié selon la revendication 2, dans lequel une plaque de séparation (70) est prévue dans ladite matrice inférieure (40) pour le formage par moulage sous pression pour séparer deux flux de ladite résine ramollie apportés de leurs ouvertures respectives (42, 43) l'un de l'autre.

4. Dispositif d'assemblage de matrices pour mouler un ensemble stratifié selon la revendication 2, dans lequel ledit dispositif de moulage par injection comprend un premier dispositif de moulage par injection (61) pour apporter de la résine ramollie (M₁) à ladite ouverture (42) prévue dans ladite matrice inférieure pour une partie dudit élément de noyau en résine couverte par ledit élément de pellicule superficielle, et un second dispositif de moulage par injection (62) pour apporter de la résine ramollie (M₂) à ladite autre ouverture (43) prévue dans ladite matrice inférieure pour une partie dudit élément de noyau en résine non couverte par ledit élément de pellicule superficielle, une plaque de séparation verticale mobile (70) pour fournir une limite entre deux flux de résine souple (M₁, M₂) apportés par lesdits dispositifs de moulage par injection.
